# EUROPÄISCHE PATENTSCHRIFT

(11) **EP 3 090 926 B1**
(45) Veröffentlichungstag und Bekanntmachung des Hinweises auf die Patenterteilung: **03.07.2019**
(21) Anmeldenummer: 15166447.1
(22) Anmeldetag: 05.05.2015
(51) Int. Cl.: B62D 25/20

(54) **BODENSTRUKTUR EINES AUFBAUS EINES NUTZFAHRZEUGS**
FLOOR OF A STRUCTURE OF A COMMERCIAL VEHICLE
STRUCTURE DE PLANCHER D'UNE CARROSSERIE DE VÉHICULE UTILITAIRE

(43) Veröffentlichungstag der Anmeldung: 09.11.2016
(73) Patentinhaber: Schmitz Cargobull AG, 48341 Altenberge (DE)
(72) Erfinder: Beelmann, Reinhard, 45721 Haltern an See (DE); Maier, Christopf, 41564 Kaarst (DE)
(74) Vertreter: Cohausz & Florack

(56) Entgegenhaltungen:
- EP-A1- 0 244 350
- EP-A1- 2 116 447
- EP-A1- 2 116 456
- EP-A2- 2 025 582
- US-A- 5 054 843

## Beschreibung

Die Erfindung betrifft einen Aufbau, insbesondere Kofferaufbau, eines Nutzfahrzeugs, insbesondere Lastkraftwagens, Anhängers oder Sattelaufliegers, mit einer Bodenstruktur umfassend eine obere Decklage, eine untere Decklage und einer zwischen der oberen Decklage und der unteren Decklage angeordneten Kernlage, wobei die obere Decklage einen Ladeboden zum Aufstellen von Ladung bereitstellt und wobei die Kernlage wenigstens einen die obere Decklage stützenden Querträger und wenigstens einen benachbart zum Querträger vorgesehenen, vorzugsweise geschäumten, Kunststoff aufweist. Ferner betrifft die Erfindung ein Nutzfahrzeug mit einem Chassis und einem entsprechenden Aufbau.

Nutzfahrzeuge der genannten Art, beispielsweise in Form von Lastkraftwagen, Anhängern und Sattelaufliegern, sind insbesondere für den Transport von Gütern, insbesondere Stückgütern und/oder Schüttgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter dienen. Es sind beispielsweise sogenannte Planenaufbauten bekannt, welche einen Laderaum umfassen und wenigstens eine Plane zum Verschließen wenigstens einer Seite und/oder des Dachs des Planenaufbaus aufweisen. Wenn die Plane entlang der Seitenwand verschoben werden kann, spricht man auch von sogenannten Curtainsidern. Bei sogenannten Kofferaufbauten sind die Seitenwände und das Dach durch feste Wände verschlossen. Auch die Stirnwand ist bei Kofferaufbauten typischerweise als feste Wand ausgebildet, während die Rückwand meist aus zwei Flügeltüren, einem Rolltor oder dergleichen gebildet wird, um den Kofferaufbau von hinten beladen zu können.

Die Seitenwände, das Dach und die Stirnwand sind zudem in der Regel in Form von mehrschichtigen Paneelen aufgebaut. Die Paneele umfassen eine innere strukturgebende Decklage, eine äußere strukturgebende Decklage und eine Kernlage aus einem geschäumten Kunststoff. Die Decklagen können selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und infolge des geschäumten Kunststoffs eine hohe thermische Isolation bereitstellen, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet.

Zudem gibt es offene Aufbauten, bei denen der Laderaum nicht verschlossen, sondern jedenfalls nach oben offen ist. Bedarfsweise sind zur Begrenzung des Laderaums zur Seite, nach vorne und/oder nach hinten sogenannte Ladebordwände vorgesehen, die nach unten geschwenkt werden können, um das Beladen und Entladen zu erleichtern. Solche offenen Aufbauten dienen oft dem Transport von Schüttgütern, beispielsweise in Form von Baustoffen.

Die genannten Aufbauten weisen eine Bodenstruktur auf, von der die zu transportierenden Güter getragen werden. Die Bodenstruktur umfasst eine obere Decklage, welche eine strukturgebende Decklage ist und den Ladeboden der Bodenstruktur bereitstellt. Auf dem Ladeboden kann die zu transportierende Ladung abgestellt werden. Die obere Decklage ist daher verwindungssteif, um die Ladung problemlos tragen und beispielsweise mit Staplern oder Hubwagen befahren werden zu können. Zudem ruht die obere Decklage direkt oder indirekt auf eine Reihe von Querträgern, die quer zur Längserstreckung des Nutzfahrzeugs verlaufen und einen rechteckigen Querschnitt aufweisen. Die Gewichtskräfte der Ladung werden daher überwiegend von den Querträgern aufgenommen und von diesen an das Chassis des Nutzfahrzeugs abgeleitet. Nach unten wird die Bodenstruktur von einer unteren Decklage abgeschlossen, die recht dünn und meist weniger strukturgebend ist als die obere Decklage. Die untere Decklage ruht typischerweise auf den Längsträgern des Chassis des Nutzfahrzeugs, mit denen die Bodenstruktur über die Querträger verschraubt ist. Zwischen der oberen Decklage und der unteren Decklage sowie zwischen den Querträgern ist ein meist geschäumter Kunststoff vorgesehen. Dieser sorgt einerseits für eine zusätzliche Aussteifung der Bodenstruktur und andererseits für eine thermische Isolation derselben, wobei der Kunststoff selbst verglichen mit den Querträgern nur ein geringes spezifisches Gewicht aufweist. Zudem ist die spezifische Wärmeleitfähigkeit des Kunststoffs gering, und zwar in der Regel deutlich geringer als die spezifische Wärmeleitfähigkeit der Querträger. Dagegen ist die Festigkeit und Steifigkeit der Querträger sehr viel höher als die Festigkeit und Steifigkeit des typischerweise geschäumten Kunststoffs.

Insbesondere bei der Herstellung von sogenannten Kühlkofferaufbauten, die für den Transport von temperaturempfindlichen Gütern bei verringerter oder erhöhter Temperatur vorgesehen sind, werden durch die Verteilung von Querträgern und Kunststoff längs der Bodenstruktur sowohl die gewünschten mechanischen als auch die gewünschten thermischen Eigenschaften eingestellt. So werden die Querträger mit einem ausreichenden Abstand zueinander vorgesehen, um dazwischen einen möglichst gut thermisch isolierenden Kunststoff vorsehen zu können, so dass ein geringer Wärmedurchgangskoeffizient (k-Wert in W/m²·K) der Bodenstruktur insgesamt bereitgestellt werden kann. Gleichzeitig sind die Querträger aber nur soweit voneinander beabstandet und zugleich jeweils so breit ausgebildet, dass die Bodenstruktur eine hohe Steifigkeit bereitstellt. Die Auslegung der Bodenstruktur stellt also einen Kompromiss zwischen der Steifigkeit und dem Wärmedurchgangskoeffizient der Bodenstruktur dar, der in einigen Fällen noch nicht zufriedenstellend ist.
Dokument US 5 054 843 A offenbart einen Aufbau eines Nutzfahrzeugs gemäß dem Oberbegriff des unabhängigen Anspruchs 1. Daher liegt der vorliegenden Erfindung die Aufgabe zugrunde, den Aufbau und das Nutzfahrzeug jeweils der eingangs genannten und zuvor näher beschriebenen Art derart auszugestalten und weiterzubilden, dass die Bodenstruktur des Aufbaus eine höhere Steifigkeit bei gleichem Wärmedurchgangskoeffizienten oder umgekehrt ermöglicht.

Diese Aufgabe ist bei einem Aufbau nach dem Oberbegriff des Anspruchs 1 dadurch gelöst, dass auf wenigstens 25% der Längserstreckung des Querträgers wenigstens eine seitliche Aussparung des Querträgers vorgesehen ist.

Die vorgenannte Aufgabe ist ferner durch ein Nutzfahrzeug mit einem Chassis und einem Aufbau nach einem der Ansprüche 1 bis 14 gelöst, wobei die Bodenstruktur von dem Chassis getragen wird, wobei die untere Decklage dem Chassis zugeordnet ist und wobei der wenigstens eine Querträger mit dem Chassis, insbesondere wenigstes einem Längsträger des Chassis, verbunden, insbesondere verschraubt, ist.

Die Erfindung hat erkannt, dass nicht bloß die Verhältnisse von Querträgern und Kunststoff im den Bodenstrukturen zwischen der oberen Decklage und der unteren Decklage sowie die Materialien von Querträgern und Kunststoff so gewählt werden können, dass eine ausreichende Steifigkeit der Bodenstruktur bei hinreichender thermischer Isolation erreicht wird. Es kann vielmehr zusätzlich die Ausgestaltung der Querträger so gewählt werden, dass diese möglichst wenig zum Wärmetransport durch die Bodenstruktur beitragen ohne gleichzeitig die Bodenstruktur nennenswert mechanisch zu schwächen. Das Verhältnis zwischen thermischer Isolation und mechanischer Stabilität kann also weiter verbessert werden.

Eine derartige Ausgestaltung der Querträger wird erfindungsgemäß erreicht, indem wenigstens ein Querträger anstelle des im Stand der Technik üblichen rechteckigen Querschnitts mit einer jedenfalls bereichsweise vorgesehenen seitliche Aussparung versehen wird. Es werden also nicht insgesamt schmalere Querträger mit rechteckigem Querschnitt verwendet, da dies nennenswert zu Lasten der Steifigkeit der Bodenstruktur ginge. Es wird vielmehr gezielt der Querschnitt wenigstens eines Querträgers lokal verändert, indem dieser wenigstens eine Querträger mit einer seitlichen Aussparung versehen wird. Dies bedeutet, dass die seitliche Aussparung der Querträger zu einer lokal verminderten Breite des Querträgers bezogen auf einen rechteckigen Querschnitt des Querträgers führt, der durch Wegfall der wenigstens einer seitlichen Aussparung erhalten würde. Die Höhe des Querträgers wird durch die seitliche Aussparung jedoch nicht oder nicht zwingend beeinflusst.

Im Bereich der wenigstens einen seitlichen Aussparung verläuft letztlich die Kontur des entsprechenden Querträgers in einem Abstand zu einer gedachten, also körperlich nicht vorhandenen, Umhüllenden des Querträgers, wobei die Umhüllende einen rechteckigen Querschnitt aufweist. Der rechteckige Querschnitt der Umhüllenden wird durch vier rechtwinklig zueinander ausgerichtete Flächen gebildet, von denen zwei an den gegenüberliegenden Längsseiten des Querträgers anliegen. Eine weitere Fläche der Umhüllenden liegt an der der oberen Decklage zugewandte Oberseite des Querträgers an, während die übrige Fläche an der der unteren Decklage zugewandten Unterseite anliegt. Anliegen bedeutet hier, dass die Flächen unmittelbar angrenzend zum Querträger verlaufen, ohne jedoch den Querträger zu schneiden. Mit anderen Worten bildet die Umhüllende den Rand eines Querträgers mit einem rechteckigen Querschnitt nach, in den die wenigstens eine seitliche Aussparung nachträglich durch Entfernen von Material des Querträgers, beispielsweise im Wege des Herausfräsens, eingebracht wird. Somit symbolisiert die Umhüllende bedarfsweise den Querschnitt eines rechteckigen Querträgers, wie er grundsätzlich bereits aus dem Stand der Technik bekannt ist.

Die Form und Ausdehnung der wenigstens einen seitlichen Aussparung kann gezielt an die mechanischen Belastungen des Querträgers angepasst werden. Dies geschieht beispielsweise so, dass die seitliche Aussparung in einem Bereich des Querträgers vorgesehen ist, der für die Stabilität der Bodenstruktur insgesamt weniger entscheidend ist als andere Bereiche. Insbesondere kommen für die seitliche Aussparung Bereiche in Frage, in denen unter Belastung die Spannungen ohne seitliche Aussparung, also bei rechteckigem Querschnitt des Querträgers, geringer wären als an anderen Stellen des Querträgers. Dabei hat sich gezeigt, dass die Spannungen in den entsprechend belasteten Querträgern mit einem rechteckigen Querschnitt angrenzend zu der oberen Decklage und angrenzend zu der unteren Decklage in vielen Fällen höher sind als die Spannungen in einem dazwischen liegenden Abschnitt des belasteten Querträgers mit rechteckigem Querschnitt. Außerdem dienen die oberen und unteren Enden der Querträger einer möglichst flächigen Übertragung von Kräften. Die dazwischenliegenden Abschnitte bieten sich also besonders für eine seitliche Aussparung der zuvor genannten Art an.

Im Bereich der seitlichen Aussparung weist der Querträger eine verringerte Breite auf. Dies bedeutet, dass dort für den Wärmetransport senkrecht zur Bodenstruktur eine geringere Fläche zur Verfügung steht als bei einem Querträger mit einem rechteckigen Querschnitt. In Folge dessen erhöht sich der der Wärmeleitung in diesem Bereich des Querträgers entgegengesetzte Widerstand. Folglich wird über den Querträger ein geringerer Wärmestrom durch die Bodenstruktur geleitet.

Um diesen Effekt zu verstärken, kann es zweckmäßig sein, wenn sich die wenigstens eine seitliche Aussparung über die gesamte Länge des Querträgers erstreckt. Allerdings tritt der Effekt, wenn auch in geringerem Maße, ebenfalls in Erscheinung, wenn sich die wenigstens eine seitliche Aussparung nur teilweise über die Länge des Querträgers erstreckt. Es ist vorgesehen, dass sich die wenigstens eine seitliche Aussparung wenigstens über 20%, bedarfsweise wenigstens 25% der Längserstreckung des Querträgers erstreckt. Andernfalls sind die Auswirkungen der wenigstens einen seitlichen Aussparung nicht oder nur bedingt geeignet, um eine erhebliche Verbesserung der thermischen Eigenschaften der Bodenstruktur, insbesondere eine Verringerung des k-Werts der Bodenstruktur, herbeizuführen, die den Aufwand für die Bereitstellung der wenigstens einen seitlichen Aussparung rechtfertigt.

In diesem Zusammenhang wird darauf hingewiesen, dass sich nicht eine einzige Aussparung über die vorgegebenen wenigstens 20% der Länge des Querträgers erstrecken muss. Es kann vielmehr auch eine Mehrzahl von in Längsrichtung des Querträgers, bedarfsweise gleichmäßig, verteilten Aussparungen vorgesehen sein, die insgesamt eine Längserstreckung ausweisen, die wenigstens 20% der Länge des Querträgers entspricht.

Bei einer ersten bevorzugten Ausgestaltung der Bodenstruktur ist die wenigstens eine seitliche Aussparung auf wenigstens 30%, vorzugsweise wenigstens 50%, insbesondere wenigstens 75%, der Längserstreckung des Querträgers vorgesehen. Dabei werden die thermischen Eigenschaften der Bodenstruktur umso günstiger, je größer die Längserstreckung der wenigstens einen seitlichen Aussparung bezogen auf die Länge des Querträgers ist, während sich gleichzeitig die mechanischen Eigenschaften der Bodenstruktur tendenziell verschlechtern. Auch in diesem Zusammenhang kann die Längserstreckung der wenigstens einen seitlichen Aussparung in Längsrichtung des Querträgers unterbrochen sein. Mit anderen Worten kann die entsprechende Längserstreckung durch eine Mehrzahl beispielsweise in Längsrichtung beabstandeter seitlicher Aussparungen bzw. Teile von wenigstens einer Unterbrechungen aufweisenden seitlichen Aussparung erzielt. Dies ist beispielsweise dann der Fall, wenn der Querträger, dort wo der Querträger mit dem Chassis des Nutzfahrzeugs verbunden wird, nicht geschwächt werden soll. In diesen Bereichen kann dann die seitliche Aussparung beendet oder unterbrochen werden. Besonders bevorzugt es grundsätzlich, wenn die wenigstens eine seitliche Aussparung über wenigstens nahezu die gesamte Längserstreckung des Querträgers verläuft, also etwa über wenigstens 90% oder gar wenigstens 95% des Querträgers. Eine nennenswerte thermische Verbesserung der Bodenstruktur wird jedoch auch dann erzielt, wenn Teile des Querträgers ohne seitliche Aussparung bleiben.

Alternativ oder zusätzlich ist es bevorzugt, wenn die wenigstens eine seitliche Aussparung sich über wenigstens 10%, vorzugsweise wenigstens 20%, insbesondere wenigstens 30% der Höhenerstreckung und/oder der maximalen Breitenerstreckung des Querträgers erstreckt. Das bedeutet mit anderen Worten, dass die wenigstens eine seitliche Aussparung eine Erstreckung quer zum Querträger und entweder senkrecht zur Bodenstruktur oder parallel zur Bodenstruktur aufweist, die wenigstens 10%, vorzugsweise wenigstens 20%, insbesondere wenigstens 30% der Höhenerstreckung und/oder der Breiteerstreckung des Querschnitts der zuvor bereits beschriebenen Umhüllenden beträgt. Je mehr die wenigstens eine seitliche Aussparung die Breite des Querträgers verringert, desto größer ist an dieser Stelle der der Wärmeleitung durch den Querträger entgegengesetzte Widerstand. Gleiches ist der Fall, wenn sich die seitliche Aussparung über einen größeren Teil der Höhe des Querträgers senkrecht zur Bodenstruktur erstreckt. Mit anderen Worten wird der Wärmedurchgangskoeffizient der Bodenstruktur umso weiter verringert je ausgeprägter und größer die wenigstens eine seitliche Aussparung des wenigstens einen Querträgers ist.

Die wenigstens eine seitliche Aussparung kann alternativ oder zusätzlich auch so vorgesehen sein, dass die wenigstens eine seitliche Aussparung in einem Querschnitt eine Fläche definiert, die wenigstens 10%, vorzugsweise wenigstens 15%, insbesondere wenigstens 20% der Querschnittsfläche der Umhüllenden und/oder der verbleibenden Querschnittsfläche des Querträgers entspricht. Dabei wird der Wärmetransport mit steigender durch die wenigstens eine seitliche Aussparung eingenommene Fläche vermindert. Zu groß sollte die entsprechende Fläche aber auch nicht sein, damit die Stabilität des Querträgers nicht zu stark eingeschränkt wird. Die Fläche der wenigstens einen seitlichen Aussparung sollte daher bedarfsweise höchstens 50% oder gar höchstens 40% der Querschnittsfläche der Umhüllenden und/oder der verbleibenden Querschnittsfläche des Querträgers entsprechen. Die optimalen Flächenverhältnisse hängen dabei auch von der Form und der Anzahl der in einem Querschnitt des Querträgers vorgesehenen seitlichen Aussparungen ab.

Damit der Querträger trotz der wenigstens einen seitlichen Aussparung die Schwerkräfte der Ladung zuverlässig ableiten kann, ist es bevorzugt, wenn bei voneinander gegenüberliegende Seiten des Querträgers jeweils wenigstens eine Aussparung vorgesehen ist. Dann kann der Wärmedurchgangskoeffizient der Bodenstruktur deutlich verringert werden, ohne die Stabilität des Querträgers zu sehr einzuschränken oder zu hohe Spannungsspitzen im Querträger hervorzurufen. Bedarfsweise kann es zweckmäßig sein, an wenigstens einer Stelle des wenigstens einen Querträgers wenigstens eine seitliche Aussparung in Form einer durchgehenden Öffnung quer zur Bodenstruktur vorzusehen. An dieser Stelle wird dann auch der Wärmetransport wenigstens über den Querträger unterbunden, was insbesondere im Bereich möglicher Kältebrücken von Vorteil sein kann.

Alternativ oder zusätzlich kann es zur Stabilisierung des Querträgers trotz der wenigstens einen seitlichen Aussparung und zur Vermeidung von unnötigen Spannungsspitzen zweckdienlich sein, wenn wenigstens eine seitliche Aussparung in einer Ebene senkrecht zur Bodenstruktur und quer zum Querträger U-förmig ausgebildet ist. Aus demselben Grund kann die seitliche Aussparung aber alternativ oder zusätzlich auch eine wenigstens im Wesentlichen gebogene Kontur aufweisen. Herstellungstechnisch einfach und zweckmäßig für das Festlegen des Querträgers kann es sein, wenn die Kontur der wenigstens einen seitlichen Aussparung wenigstens einen geradlinig verlaufenden Abschnitt aufweist.

Die wenigstens eine seitliche Aussparung kann auch in Form einer, insbesondere rechteckigen, Nut mit wenigstens im Wesentlichen parallel zu einander und zur Bodenstruktur verlaufenden Nutflanken ausgebildet sein. Eine entsprechende seitliche Aussparung kann sehr einfach gefertigt werden, und zwar beispielsweise durch Herausfräsen aus einem aus einem Holzwerkstoff gebildeten Querträger.

Zum einfachen Festlegen des Querträgers beispielswiese an einem Chassis des Nutzfahrzeugs kann es bevorzugt sein, wenn wenigstens eine in die wenigstens eine seitliche Aussparung eines Querträgers eingreifende Konsole vorgesehen ist. Der Querträger kann dann problemlos über die Konsole gegenüber der Bodenstruktur, vorzugsweise der unteren Decklage und/oder dem Chassis des Nutzfahrzeugs, festgelegt sein. Dabei bietet sich insbesondere eine formschlüssige und/oder kraftschlüssige Verbindung zwischen dem Querträger und der Konsole an. Die Verbindung der Konsole mit beispielsweise dem Chassis ist aufgrund der Langlebigkeit der Verbindung vorzugsweise kraftschlüssig ausgebildet. Zudem kann der Querträger mit jeweils wenigsten einer Konsole an jedem der Längsträger montiert sein.

Zur einfachen und zuverlässigen Montage der Bodenstruktur an einem Chassis des Nutzfahrzeugs kann alternativ oder zusätzlich wenigstens ein in die wenigstens eine seitliche Aussparung eingreifendes Montageelement vorgesehen sein. Dabei kann das Montageelement insbesondere in eine durchgehende Öffnung des Querträgers eingreifen, was festigungstechnisch begünstigt sein kann. Das Montageelement dient dem Festlegen des Querträgers gegenüber der Bodenstruktur, vorzugsweise der unteren Decklage und/oder dem Chassis, insbesondere einem Längsträger des Chassis, des Nutzfahrzeugs. Dazu kann der Einfachheit halber eine Schraube durch die untere Decklage und/oder den Längsträger in das Montageelement eingeschraubt sein. Weitervorzugsweise kann der Querträger jedem Längsträger des Chassis zugeordnet wenigstens ein entsprechendes Montageelement aufweisen.

Um insbesondere den konvektiven Wärmetransport durch die Bodenstruktur zu vermindern, kann die wenigstens eine seitliche Aussparung wenigstens im Wesentlichen durch einen, vorzugsweise geschäumten, Kunststoff, ausgefüllt sein. Im Bereich der seitlichen Aussparung kann daher Luft nicht oder lediglich erschwert zirkulieren und dabei Wärme transportieren.

Um die seitliche Aussparung recht einfach mit Kunststoff versehen zu können, kann in wenigstens einer seitlichen Aussparung, vorzugsweise in jeder seitlichen Aussparung, des wenigstens einen Querträgers ein separates Stück Kunststoff vorgesehen sein. Es können dann einfach zu fertigende Kunststoffelemente zum Aufbau der Bodenstruktur verwendet werden. Zudem können die Kunststoffteile einfach nacheinander Schritt für Schritt vorgesehen werden. So ist es auch möglich, den Querträger mit Kunststoffelementen in der wenigstens einen seitlichen Aussparung vorzufertigen und den entsprechend konfektionierten Querträger anschließend einfach und ohne weitere Arbeitsschritte in die Bodenstruktur zu integrieren. Aus denselben Gründen können auch zwischen den Querträgern Kunststoffelemente vorgesehen sein, die separat sind von dem wenigstens einen Kunststoffelement in wenigstens einer seitlichen Aussparung des wenigstens einen Querträgers. Die separaten Kunststoffelemente können untereinander verbunden sein, sind dementsprechend aber bevorzugt nicht einstückig ausgebildet.

Alternativ kann der Kunststoff in der wenigstens einen seitlichen Aussparung und zwischen den Querträgern auch einstückig ausbildet sein. Dann müssen weniger Einzelteile gehandhabt werden. Ein entsprechend einstückiger Kunststoff kann beispielsweise einfach bereitgestellt werden, wenn der Zwischenraum zwischen wenigstens zwei Querträgern und wenigsten einer zu diesem Zwischenraum offenen seitlichen Aussparung ausgeschäumt wird, und zwar insbesondere durch einbringen eines noch nicht ausreagierten und/oder ausgehärteten Kunststoffs.

Eine gleichmäßige Kraftableitung über den wenigstens einen Querträger kann ohne erhöhte Spannungsspitzen erreicht werden, wenn der wenigstens eine Querträger wenigstens im Wesentlichen symmetrisch zu einer Ebene längs zum Querträger und senkrecht zur Bodenstruktur ist. Dies erleichtert bedarfsweise auch die Herstellung und die Montage der Querträger, weil dann die korrekte Ausrichtung der Querträger eine geringere Rolle spielt.

Zum Aufbau einer bevorzugten Bodenstruktur im Hinblick auf die mechanischen und die thermischen Eigenschaften kann eine Mehrzahl von, insbesondere gleichartigen, wenigstens im Wesentlichen parallel zueinander angeordneten Querträgern vorgesehen sein. Dabei ist es weiter zweckmäßig, wenn die Querträger jeweils durch einen, insbesondere geschäumten, Kunststoff voneinander beabstandet sind. Alternativ oder zusätzlich handelt es sich bei dem Kunststoff vorzugsweise um, insbesondere geschäumtes, Polyurethan und/oder Polystyrol, da diese Kunststoffe gute mechanische und thermische Eigenschaften miteinander verbinden. Erfindungsgemäß bietet es sich aus Kostengesichtspunkten an, dass der wenigstens eine Querträger aus Holz, insbesondere Sperrholz, gebildet ist.

Nachfolgend wird die Erfindung anhand einer lediglich Ausführungsbeispiele darstellenden Zeichnung näher erläutert. In der Zeichnung zeigt
- Fig. 1: ein erfindungsgemäßes Nutzfahrzeug mit einem ersten erfindungsgemäßen Aufbau in einer perspektivischen Ansicht,
- Fig. 2A-C: ein Detail der Bodenstruktur des Aufbaus aus Fig. 1 in verschiedenen Schnittdarstellungen,
- Fig. 2D: eine schematische Darstellung eines Querträgers der Bodenstruktur des Aufbaus aus Fig. 1,
- Fig. 3A-C: ein Detail einer Bodenstruktur eines zweiten erfindungsgemäßen Aufbaus in verschiedenen Schnittdarstellungen und
- Fig. 4A-B: ein Detail einer Bodenstruktur eines dritten erfindungsgemäßen Aufbaus in verschiedenen Schnittdarstellungen,

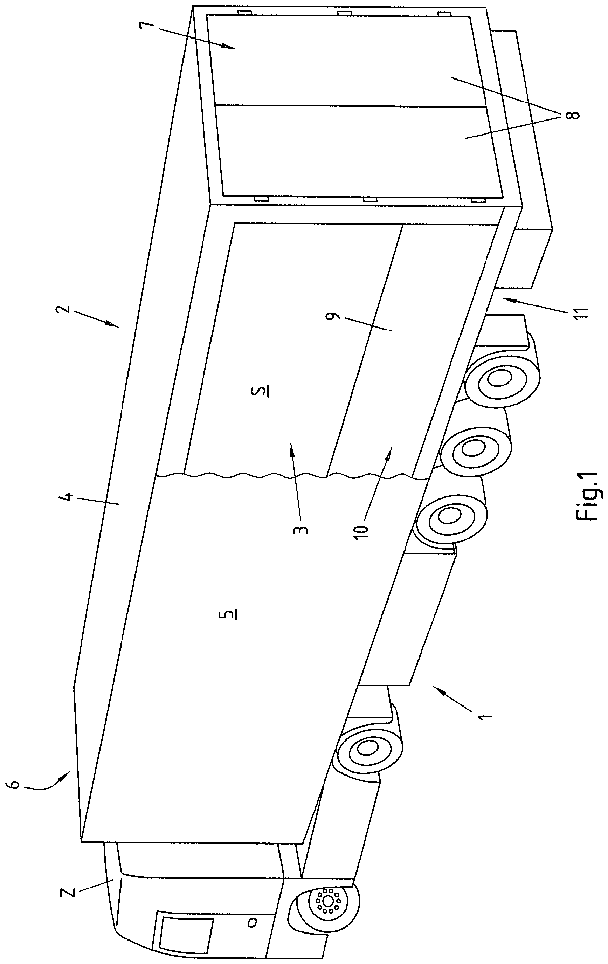

In der Fig. 1 ist ein von einer Zugmaschine Z gezogenes Nutzfahrzeug 1 in Form eines Sattelaufliegers mit einem Aufbau 2 in Form eines Kofferaufbaus in einer perspektivischen Ansicht dargestellt. Der Aufbau 2 umschließt einen Laderaum 3 und umfasst ein festes Dach 4, zwei feste Seitenwände 5, eine feste Stirnwand 6 und eine Rückwand 7 mit zwei schwenkbaren Flügeltüren 8. Die vordere der beiden Seitenwände 5 ist nur teilweise dargestellt, um den Blick in den Laderaum 3 und auf den Ladeboden 9 freizugeben. Das Dach 4, die Seitenwände 5 und die Stirnwand 6 werden durch mehrschichtige Paneele gebildet, die jeweils eine zum Laderaum 3 weisende innere Decklage, eine zur Umgebung weisende äußere Decklage und eine dazwischen vorgesehene Kernlage aus einem geschäumten Kunststoff umfassen. Die innere Decklage und die äußere Decklage dienen der Aussteifung der Paneele und können bedarfsweise aus mehreren Schichten aufgebaut sein.

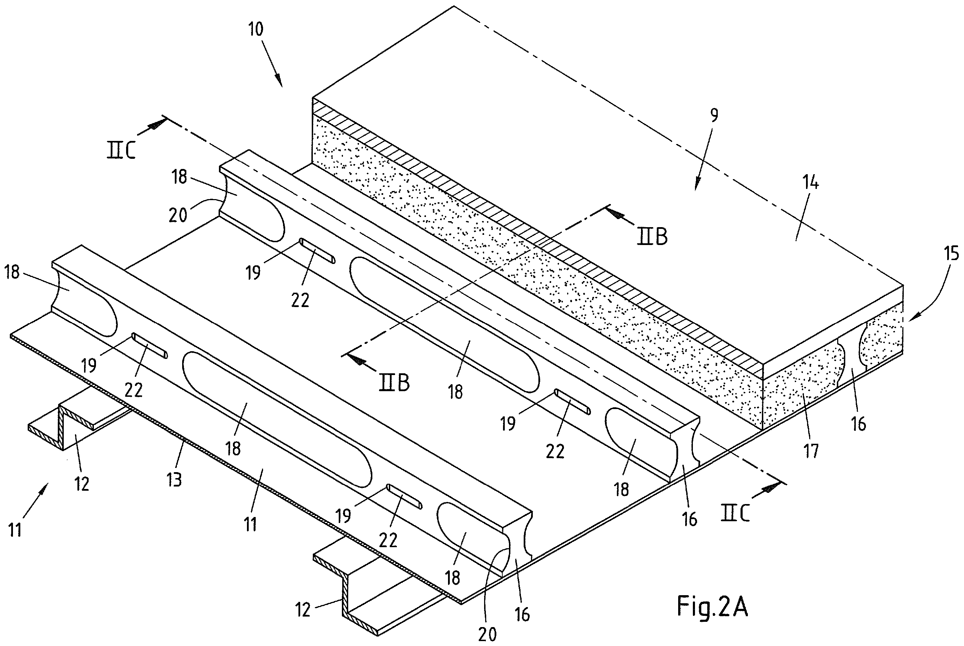

Auch die in der Fig. 2A näher in einer Schnittdarstellung dargestellte Bodenstruktur 10 des Aufbaus ist mehrschichtig aufgebaut und liegt beim dargestellten und insoweit bevorzugten Nutzfahrzeug 1 auf dem Chassis 11 des Nutzfahrzeugs 1, und zwar insbesondere auf den Längsträgern 12 des Chassis 11, auf. Der untere Abschluss der Bodenstruktur 10 wird durch eine untere Decklage 13 gebildet, die beim dargestellten und insoweit bevorzugten Nutzfahrzeug 1 auf dem Chassis 11 aufliegt. Ferner ist eine obere Decklage 14 vorgesehen, die den Ladeboden 9 bildet, auf dem die zu transportierende Ladung abgestellt werden kann. Dazwischen ist eine Kernlage 15 vorgesehen, die eine Reihe paralleler und voneinander beabstandeter Querträger 16 umfasst, die sich quer zum Nutzfahrzeug 1 und den Längsträgern 12 erstrecken. Der zwischen den Querträgern 16 verbleibende Raum der Kernlage 15 ist beim dargestellten und insoweit bevorzugten Aufbau 2 durch einen geschäumten Kunststoff 17 ausgefüllt. Die Querträger 16 sind dabei zudem so ausgebildet, dass die Querträger 16 von oben auf den Ladeboden 9 einwirkende Kräfte teilweise nach unten an das Chassis 11 weiterleiten. Diese Lastabtragung wird also vornehmlich durch die Querträger 16 und nur in geringerem Maße vom geschäumten Kunststoff 17 zwischen den Querträgern 16 bewirkt. Beim dargestellten und insoweit bevorzugten Aufbau 2 liegen die Querträger 16 mit ihrem oberen Ende an der oberen Decklage 14 und mit ihrem unteren Ende an der unteren Decklage 13 an. Die dargestellte obere Decklage 14 ist aus einem Metall, insbesondere Aluminium, oder einem, insbesondere mit Harz imprägnierten, Holzwerkstoff gebildet. Bedarfsweise könnte die obere Decklage 14 aber auch mehrschichtig aufgebaut sein. Gleiches gilt für die untere Decklage 13, die beim dargestellten und insoweit bevorzugten Aufbau 2 aus einer Metallschicht, insbesondere Blechschicht, besteht.

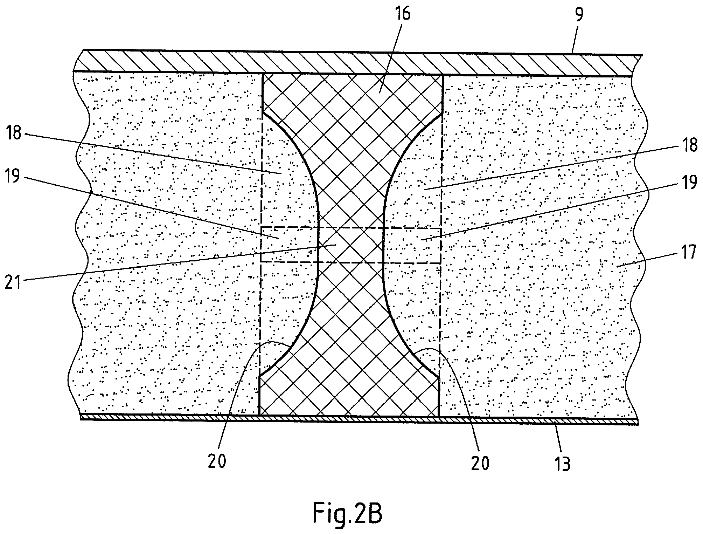

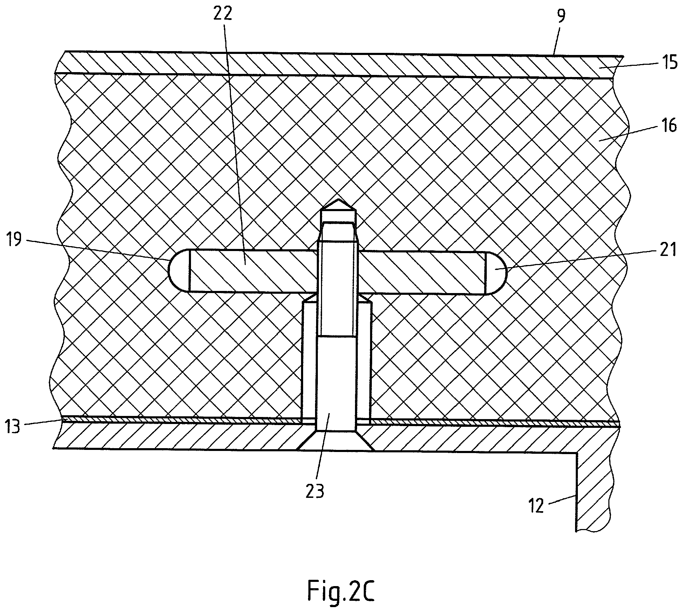

Die Querträger 16 weisen an den gegenüberliegenden Längsseiten jeweils seitliche Aussparungen 18,19 auf, die sich zusammengenommen über den überwiegenden Großteil der Längserstreckung der Querträger 16 erstrecken. Eine Reihe von seitlichen Aussparungen 18 weisen in einer Ebene senkrecht zur Bodenstruktur 10 und zum jeweiligen Querträger 16 eine bogenförmige Kontur 20 auf, die im Wesentlichen U-förmig ausgebildet ist, wie dies im Detail in der Fig. 2B dargestellt ist. Die Kontur 20 der seitlichen Aussparungen ist zudem bogenförmig gekrümmt. Ferner sind zwischen den Aussparungen 18 mit U-förmiger Kontur 20 weitere seitliche Aussparungen 19 vorhanden, die durchgehende schlitzförmige Öffnungen 21 bilden. In diesen schlitzförmigen Öffnungen 21 sind Montageelemente 22 in Form sogenannter Zugankerplatten eingebracht, in die eine durch den zugehörigen Längsträger 12 durchgesteckte Schraube 23 eingeschraubt ist, wie dies beispielsweise in der Fig. 2C dargestellt ist. Dadurch werden die Querträger 16 an den Längsträgern 12 des Chassis 11 festgelegt. Die eine U-förmige Kontur 20 bildenden seitlichen Aussparungen 18 sind durch denselben geschäumten Kunststoff 17 gefüllt, der auch zwischen den Querträgern 16 vorgesehen ist. Der in den Aussparungen 18 vorgesehene geschäumte Kunststoff 17 ist zudem einstückig mit dem geschäumten Kunststoff 17 zwischen den Querträgern 16 ausgebildet, also vorzugsweise in einem gemeinsamen Schritt geschäumt.

Die von einander gegenüberliegenden Seiten in den Querträger 16 eingebrachten seitliche Aussparungen 18,19 erstrecken sich zusammen jeweils über wenigstens etwa 90% der Längserstreckung der Querträger 16. Dabei erstrecken sich die U-förmigen seitliche Aussparungen 18 jeweils über etwa 30% der Breitenerstreckung und 65% der Höhenerstreckung der Querträger 16. Hierbei handelt es sich jedoch um lediglich eines von vielen möglichen Ausführungsbeispielen. Des Weiteren kann auf die Teile der seitlichen Aussparungen 19 verzichtet werden, die gemeinsam eine schlitzförmige durchgehende Öffnung 21 bilden, wenn die Querträger 16 und damit die Bodenstruktur 10 insgesamt auf andere Weise fest mit den Längsträgern 12 des Chassis 11 verbunden sind.

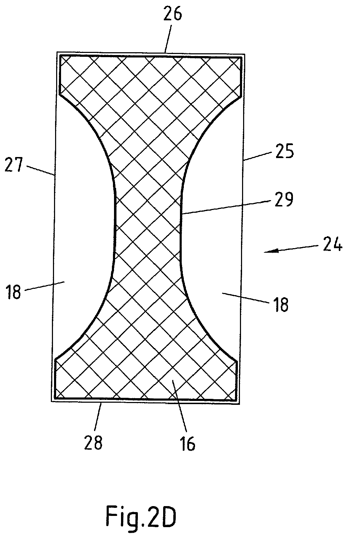

In der Fig. 2D ist exemplarisch ein Querträger 16 mit der zugehörigen, körperlich nicht existenten, Umhüllenden 24 dargestellt. Die Umhüllende 24 weist einen rechteckigen Querschnitt auf und ist durch vier reckwinklig zueinander angeordnete und ineinander übergehende Flächen 25,26,27,28 definiert, die an den beiden Längsseiten, der zur oberen Decklage hinweisenden Oberseite und der zur unteren Decklage hinweisenden Unterseite des Querträgers 16 anliegen, ohne jedoch den Querträger 16 zu schneiden, bzw. durch einen Teil des Querträger 16 hindurch zu laufen. Die seitlichen Aussparungen 18 ergeben sich als Freiraum zwischen der Umhüllenden 24 und der Außenkontur 29 des Querträgers 16.

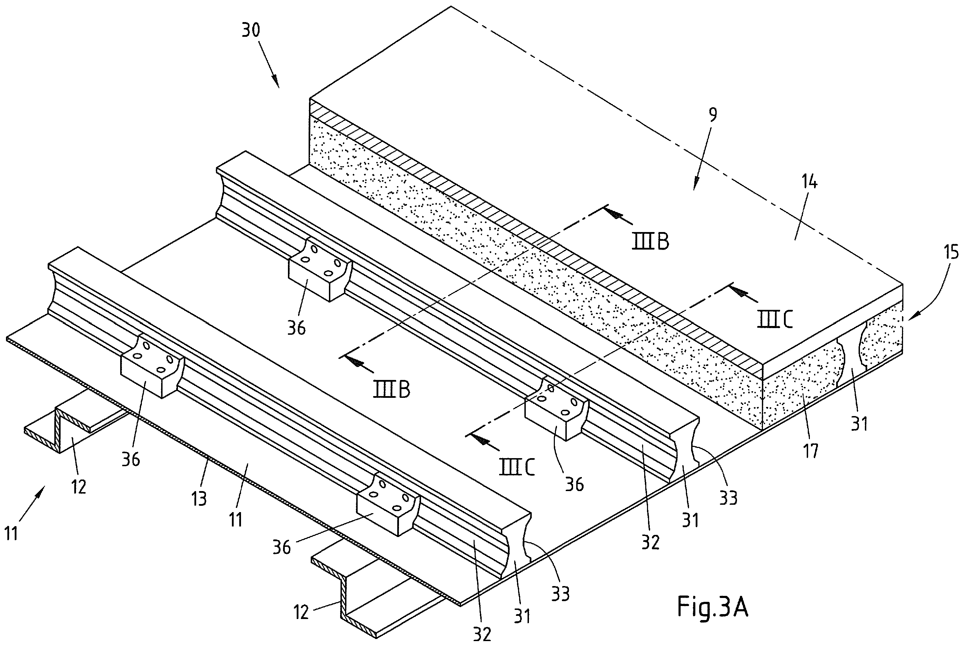

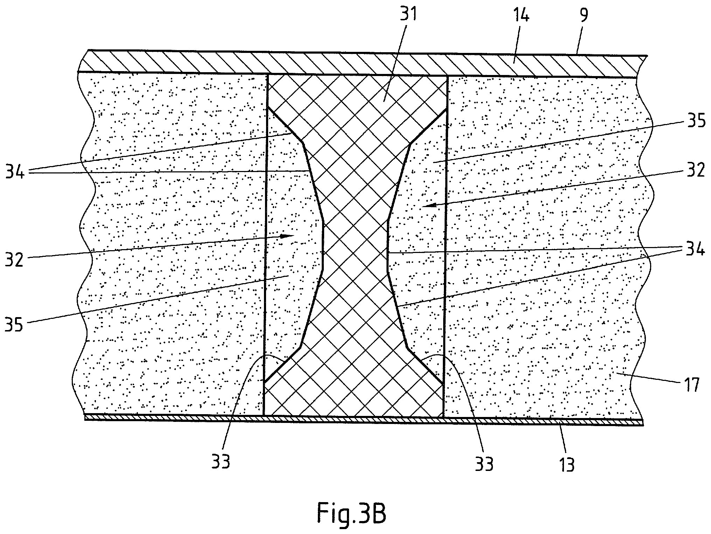

Eine alternative Ausgestaltung der Bodenstruktur 30 ist in der Fig. 3A dargestellt. Die Bodenstruktur 30 ist dabei der in der Fig. 2A dargestellten Bodenstruktur 10 sehr ähnlich, weshalb gleiche Bauteile die gleichen Bezugszeichen tragen. Allerdings sind bei der Bodenstruktur 30 gemäß Fig. 3A die Querträger 31 mit seitlichen Aussparungen 32 versehen, die auf einander gegenüberliegenden Seiten der Querträger 31 vorgesehen sind und sich über die gesamte Länge der Querträger 31 erstrecken. Die seitlichen Aussparungen 32 bilden eine etwa U-förmige Kontur 33, wobei die Kontur 33 jedoch nicht durchgehend gekrümmt ist, sondern aus einzelnen geraden bzw. ebenen Teilstücken 34 zusammengesetzt ist, wie dies insbesondere in der Fig. 3B dargestellt ist. Dort ist auch dargestellt, dass die seitlichen Aussparungen 32 durch den geschäumten Kunststoff 17,35 gefüllt sind, der auch zwischen den Querträgern 31 vorgesehen ist, jedoch als separates Stück Kunststoff 17,35. Die Dimension der seitlichen Aussparungen 32 ist dabei zudem ähnlich wie bei den in der Fig. 2A dargestellten seitlichen Aussparungen 18.

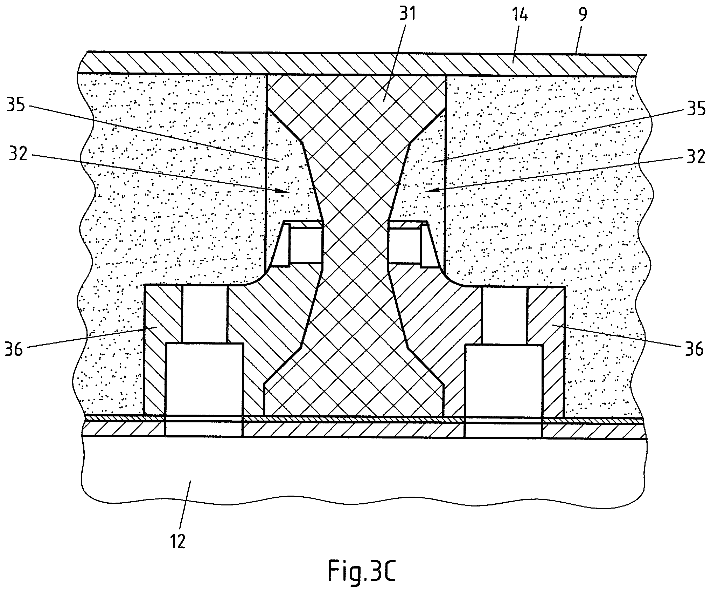

Die in der Fig. 3A dargestellten Querträger 31 sind über Konsolen 36 mit den Längsträgern 12 des Chassis 11 verbunden, die in die seitlichen Aussparungen 32 der Querträger 31 eingreifen und sowohl mit den Querträgern 31 als auch mit den Längsträgern 12 des Chassis verschraubt sind. Die Querträger 31 sind somit über die Konsolen 36 formschlüssig und kraftschlüssig am Chassis 11 festgelegt, wie dies insbesondere in der Fig. 3C dargestellt ist.

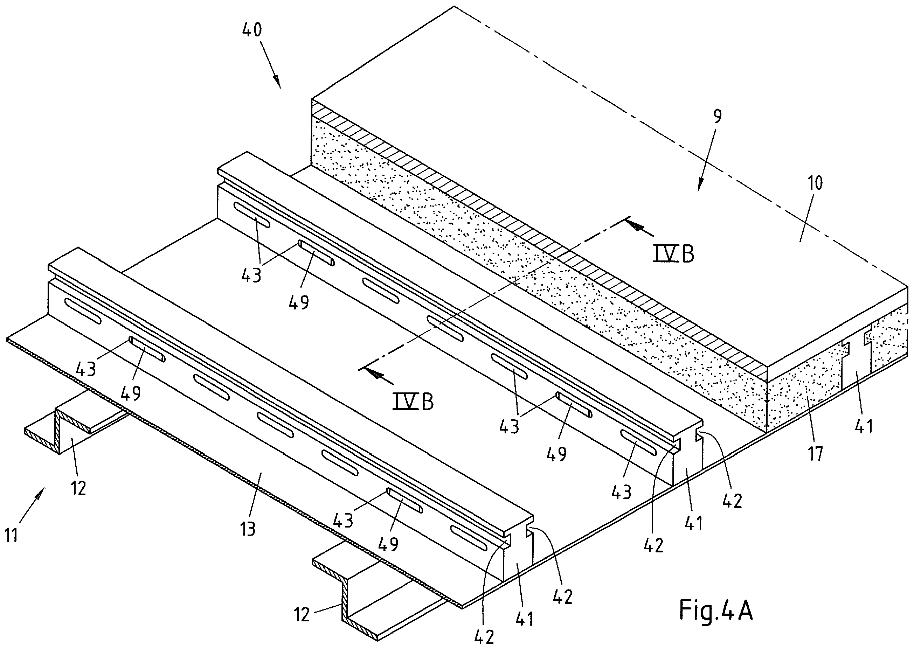

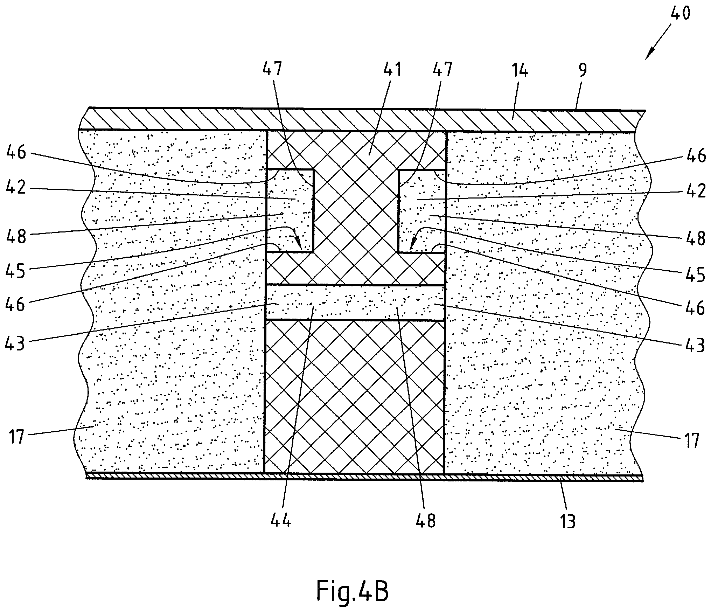

In der Fig. 4A ist eine weitere Bodenstruktur 40 dargestellt, die den Bodenstrukturen 10,30 gemäß der Fig. 2A und 3A ähnlich ist. Der Unterschied zwischen den Bodenstrukturen 10, 30, 40 betrifft im Wesentlichen die Querträger 41 mit den seitlichen Aussparungen 42,43, die an einander gegenüberliegenden Seiten der Querträger 41 vorgesehen sind. Einerseits ist eine Reihe von seitlichen Aussparungen 43 vorgesehen, die durchgehende Öffnungen 44 bilden, welche bei der dargestellten und insoweit bevorzugten Bodenstruktur 40 als schlitzförmige Durchbrüche ausgebildet sind. Diese seitlichen Aussparungen 43 sind voneinander beabstandet über die Länge der Querträger 41 verteilt angeordnet. Andererseits sind an gegenüberliegenden Seiten der Querträger 41 seitliche Aussparungen 42 vorgesehen, die sich über die gesamte Länge der Querträger 41 erstrecken. Diese Aussparungen 42 sind Nutförmig ausgebildet. Die Aussparungen 42 weisen zudem eine rechteckige Kontur 45 auf, wobei die Nutflanken 46 parallel zur Bodenstruktur 40 vorgesehen sind. Der Nutgrund 47 ist dagegen senkrecht zur Bodenstruktur 40 ausgebildet. Die Form der seitlichen Aussparungen 42 ist im Detail in der Fig. 4B dargestellt.

Die einzelnen seitlichen Aussparungen 42,43, mit Ausnahme der ein Montageelement aufweisenden seitlichen Aussparungen 43, sind mit separaten Stücken 48 eines geschäumten Kunststoffs 17 versehen. Die Querträger können folglich entsprechend vorkonfektioniert zum Aufbau der Bodenstruktur 40 verwendet werden. Die oberen, durchgehend vorgesehenen seitlichen Aussparungen 42 erstrecken sich jeweils über etwa 25% der Breitenstreckung und jeweils etwa 25% der Höhenerstreckung der Querträger 41. Die die durchgehenden Öffnungen bildenden seitlichen Aussparungen 43 erstrecken sich dagegen lediglich über 10% der Höhenerstreckung der Querträger 41.

Darüber hinaus sind die über die gesamte Länge der Querträger 41 vorgesehenen seitlichen Aussparungen 42 oberhalb von den schlitzförmige Öffnungen bildenden seitlichen Aussparungen 43 vorgesehen, was jedoch nicht zwingend der Fall sein muss. Ferner ist in jeweils zwei der schlitzförmigen Öffnungen eines Querträgers 41 jeweils ein Montageelement 49 vorgesehen, das über eine Schraube mit den Längsträgern 12 des Chassis 11 verschraubt ist, wie dies vom Prinzip bereits in der Fig. 2C dargestellt ist.

## Patentansprüche

1. Aufbau (2), insbesondere Kofferaufbau, eines Nutzfahrzeugs (2), insbesondere Lastkraftwagens, Anhängers oder Sattelaufliegers, mit einer Bodenstruktur (10,30,40) umfassend eine obere Decklage (14), eine untere Decklage (13) und einer zwischen der oberen Decklage (14) und der unteren Decklage (13) angeordneten Kernlage (15), wobei die obere Decklage (14) einen Ladeboden (9) zum Aufstellen von Ladung bereitstellt und wobei die Kernlage (15) wenigstens einen die obere Decklage (14) stützenden Querträger (16,31,41) und wenigstens einen benachbart zum Querträger (16,31,41) vorgesehenen, vorzugsweise geschäumten, Kunststoff (17) aufweist, wobei auf wenigstens 20% der Längserstreckung des Querträgers (16,31,41) wenigstens eine seitliche Aussparung (18,19,32,42,43) des Querträgers (16,31,41) vorgesehen ist,
**dadurch gekennzeichnet, dass**
der wenigstens eine Querträger (16,31,41) aus Holz gebildet ist.

2. Aufbau nach Anspruch 1,
**dadurch gekennzeichnet, dass**
die wenigstens eine seitliche Aussparung (18,19,32,42,43) auf wenigstens 30%, vorzugsweise wenigstens 50%, insbesondere wenigstens 75%, der Längserstreckung des Querträgers (16,31,41) vorgesehen ist.

3. Aufbau nach Anspruch 1 oder 2,
**dadurch gekennzeichnet, dass**
die wenigsten eine seitliche Aussparung (18,19,32,42,43) sich über wenigstens 10%, vorzugsweise wenigstens 20%, insbesondere wenigstens 30% der Höhenerstreckung und/oder der maximalen Breitenerstreckung des Querträgers (16,31,41) erstreckt..

4. Aufbau nach einem der Ansprüche 1 bis 3,
**dadurch gekennzeichnet, dass**
von einander gegenüberliegenden Seiten des Querträgers (16,31,41) jeweils wenigstens eine seitliche Aussparung (18,19,32,42,43) vorgesehen ist und/oder der wenigstens eine Querträger (16,31,41) wenigstens eine seitliche Aussparung (18,19,32,42,43) in Form einer durchgehenden Öffnung (21,44) quer zur Bodenstruktur (10,30,40) aufweist.

5. Aufbau nach einem der Ansprüche 1 bis 4,
**dadurch gekennzeichnet, dass** wenigstens eine seitliche Aussparung (18,32,42) in einer Ebene senkrecht zur Bodenstruktur und quer zum Querträger (16,31,41) U-förmig ausgebildet ist, eine wenigstens im Wesentlichen gebogene Kontur (20,33,45) bildet und/oder eine mehrere schräg zueinander verlaufende ebene Abschnitte (34) aufweisende Kontur (33) aufweist.

6. Aufbau nach einem der Ansprüche 1 bis 5,
**dadurch gekennzeichnet, dass** wenigstens eine seitliche Aussparung (42) in Form einer, insbesondere rechteckigen, Nut mit wenigstens im Wesentlichen parallel zu einander und zur Bodenstruktur (40) verlaufenden Nutflanken (46) ausgebildet ist.

7. Aufbau nach einem der Ansprüche 1 bis 6,
**dadurch gekennzeichnet, dass** wenigstens eine in die wenigstens eine seitliche Aussparung (32) eines Querträgers (31) eingreifende Konsole (36) vorgesehen ist und dass der Querträger (31) über die Konsole (36), vorzugsweise formschlüssig und/oder kraftschlüssig, gegenüber der Bodenstruktur (30), vorzugsweise der unteren Decklage (13) festgelegt ist.

8. Aufbau nach einem der Ansprüche 1 bis 7,
**dadurch gekennzeichnet, dass** wenigstens ein in die wenigstens eine seitliche Aussparung (19), insbesondere durchgehende Öffnung (21), eines Querträgers (16) eingreifendes Montageelement (22) eingebracht ist und dass zum Festlegen des Querträgers (16) gegenüber der Bodenstruktur (10), vorzugsweise der unteren Decklage (13), eine Schraube (23) durch die untere Decklage (13) in das Montageelement (22) eingeschraubt ist.

9. Aufbau nach einem der Ansprüche 1 bis 8,
**dadurch gekennzeichnet, dass** wenigstens eine seitliche Aussparung (18,32,42,43) wenigstens im Wesentlichen durch einen, vorzugsweise geschäumten, Kunststoff (17,35,48), ausgefüllt ist.

10. Aufbau nach einem der Ansprüche 1 bis 9,
**dadurch gekennzeichnet, dass**
in wenigstens einer seitlichen Aussparung (32,42,43), vorzugsweise in jeder seitlichen Aussparung (32,42,43), des wenigstens einen Querträgers (31,41) ein separates Stück Kunststoff (35,48) vorgesehen ist.

11. Aufbau nach einem der Ansprüche 1 bis 10,
**dadurch gekennzeichnet, dass**
der wenigstens eine Querträger (16,31,41) wenigstens im Wesentlichen symmetrisch zu einer Ebene längs zum Querträger (16,31,41) und senkrecht zur Bodenstruktur (10,30,40) ist.

12. Aufbau nach einem der Ansprüche 1 bis 11,
**dadurch gekennzeichnet, dass**
eine Mehrzahl von, insbesondere gleichartigen, wenigstens im Wesentlichen parallel zueinander angeordneten, vorzugsweise jeweils durch einen, insbesondere geschäumten Kunststoff (17) beabstandete, Querträger (16,31,41) aufweist.

13. Aufbau nach einem der Ansprüche 1 bis 12,
**dadurch gekennzeichnet, dass**
der, insbesondere geschäumte, Kunststoff (17,35,48) Polyurethan und/oder Polystyrol ist und/oder der wenigstens eine Querträger (16,31,41) aus Sperrholz gebildet ist.

14. Nutzfahrzeug (1) mit einem Chassis (11) und einem Aufbau (2) nach einem der Ansprüche 1 bis 13, wobei die Bodenstruktur (10,30,40) von dem Chassis (11) getragen wird, wobei die untere Decklage (13) dem Chassis (11) zugeordnet ist und wobei der wenigstens eine Querträger (16,31,41) mit dem Chassis (11), insbesondere wenigstens einem Längsträger (12) des Chassis (11) verbunden, insbesondere verschraubt, ist.

## Claims

1. Structure (2), in particular a box body, of a utility vehicle (2), in particular a lorry, trailer or semitrailer, having a base structure (10, 30, 40) comprising an upper covering layer (14), a lower covering layer (13) and a core layer (15) which is arranged between the upper covering layer (14) and the lower covering layer (13), wherein the upper covering layer (14) provides a loading floor (9) for placing cargo and wherein the core layer (15) has at least one transverse carrier (16, 31, 41) which supports the upper covering layer (14) and at least one preferably foamed plastics material (17) which is provided adjacent to the transverse carrier (16, 31, 41), wherein over at least 20% of the longitudinal extent of the transverse carrier (16, 31, 41) at least one lateral recess (18, 19, 32, 42, 43) of the transverse carrier (16, 31, 41) is provided, **characterised in that** the at least one transverse carrier (16, 31, 41) is formed from wood.

2. Structure according to claim 1,
**characterised in that**
the at least one lateral recess (18, 19, 32, 42, 43) is provided over at least 30%, preferably at least 50%, in particular at least 75%, of the longitudinal extent of the transverse carrier (16, 31, 41).

3. Structure according to claim 1 or 2,
**characterised in that**
the at least one lateral recess (18, 19, 32, 42, 43) extends over at least 10%, preferably at least 20%, in particular at least 30%, of the height extent and/or the maximum width extent of the transverse carrier (16, 31, 41).

4. Structure according to any one of claims 1 to 3,
**characterised in that**
at mutually opposing sides of the transverse carrier (16, 31, 41) at least one lateral recess (18, 19, 32, 42, 43) is provided in each case and/or the at least one transverse carrier (16, 31, 41) has at least one lateral recess (18, 19, 32, 42, 43) in the form of a through-opening (21, 44) transversely relative to the base structure (10, 30, 40).

5. Structure according to any one of claims 1 to 4,
**characterised in that**
at least one lateral recess (18, 32, 42) is constructed in a U-shaped manner in a plane perpendicular to the base structure and transverse relative to the transverse carrier (16, 31, 41), forms an at least substantially curved contour (20, 33, 45) and/or has a contour (33) which has a plurality of planar portions (34) which extend obliquely with respect to each other.

6. Structure according to any one of claims 1 to 5,
**characterised in that**
at least one lateral recess (42) is formed in the form of an in particular rectangular groove having groove flanks (46) which extend at least substantially parallel with each other and relative to the base structure (40).

7. Structure according to any one of claims 1 to 6,
**characterised in that**
at least one console (36) which engages in the at least one lateral recess (32) of a transverse carrier (31) is provided and **in that** the transverse carrier (31) is secured by means of the console (36), preferably in a positive-locking manner and/or non-positive-locking manner, with respect to the base structure (30), preferably the lower covering layer (13).

8. Structure according to any one of claims 1 to 7,
**characterised in that**
at least one assembly element (22) which engages in the at least one lateral recess (19), in particular a through-opening (21), of a transverse carrier (16) is introduced and **in that**, in order to secure the transverse carrier (16) with respect to the base structure (10), preferably the lower covering layer (13), a screw (23) is screwed through the lower covering layer (13) into the assembly element (22).

9. Structure according to any one of claims 1 to 8,
**characterised in that**
at least one lateral recess (18, 32, 42, 43) is filled at least substantially by a preferably foamed plastics material (17, 35, 48).

10. Structure according to any one of claims 1 to 9,
**characterised in that**
a separate piece of plastics material (35, 48) is provided in at least one lateral recess (32, 42, 43), preferably in each lateral recess (32, 42, 43), of the at least one transverse carrier (31, 41).

11. Structure according to any one of claims 1 to 10,
**characterised in that**
the at least one transverse carrier (16, 31, 41) is at least substantially symmetrical relative to a plane which is longitudinal with respect to the transverse carrier (16, 31, 41) and perpendicular to the base structure (10, 30, 40).

12. Structure according to any one of claims 1 to 11,
**characterised in that**
it has a plurality of in particular identical transverse carriers (16, 31, 41) which are arranged at least substantially parallel with each other and which are preferably spaced apart by means of an in particular foamed plastics material (17).

13. Structure according to any one of claims 1 to 12,
**characterised in that**
the in particular foamed plastics material (17, 35, 48) is polyurethane and/or polystyrene and/or the at least one transverse carrier (16, 31, 41) is formed from plywood.

14. Utility vehicle (1) having a chassis (11) and a structure (2) according to any one of claims 1 to 13, wherein the base structure (10, 30, 40) is carried by the chassis (11), wherein the lower covering layer (13) is associated with the chassis (11) and wherein the at least one transverse carrier (16, 31, 41) is connected, in particular screwed, to the chassis (11), in particular at least one longitudinal carrier (12) of the chassis (11).

## Revendications

1. Carrosserie (2), notamment carrosserie en fourgon, d'un véhicule utilitaire (2), notamment d'un poids lourd, d'une remorque ou semi-remorque, avec une structure de plancher (10, 30, 40) comportant une couche de couverture supérieure (14), une couche de couverture inférieure (13) et une couche centrale (15) agencée entre la couche de couverture supérieure (14) et la couche de couverture inférieure (13), la couche de couverture supérieure (14) fournissant un plancher de chargement (9) pour le placement d'un chargement et la couche centrale (15) présentant au moins une traverse (16, 31, 41) soutenant la couche de couverture supérieure (14) et au moins une matière synthétique (17), de préférence moussée, prévue adjacente à la traverse (16, 31, 41), au moins un évidement latéral (18, 19, 32, 42, 43) de la traverse (16, 31, 41) étant prévu sur au moins 20 % de l'extension longitudinale de la traverse (16, 31, 41),
**caractérisée en ce que** l'au moins une traverse (16, 31, 41) est formée en bois.

2. Carrosserie selon la revendication 1,
**caractérisée en ce que** l'au moins un évidement latéral (18, 19, 32, 42, 43) est prévu sur au moins 30 %, de préférence sur au moins 50 %, notamment sur au moins 75 %, de l'extension longitudinale de la traverse (16, 31, 41).

3. Carrosserie selon la revendication 1 ou 2,
**caractérisée en ce que** l'au moins un évidement latéral (18, 19, 32, 42, 43) s'étend sur au moins 10 %, de préférence sur au moins 20 %, notamment sur au moins 30 % de l'extension en hauteur et/ou de l'extension en largeur maximale de la traverse (16, 31, 41).

4. Carrosserie selon l'une des revendications 1 à 3,
**caractérisée en ce qu'**au moins un évidement latéral (18, 19, 32, 42, 43) est respectivement prévu sur des côtés opposés de la traverse (16, 31, 41) et/ou l'au moins une traverse (16, 31, 41) présente au moins un évidement latéral (18, 19, 32, 42, 43) sous la forme d'une ouverture traversante (21, 44) transversalement par rapport à la structure de plancher (10, 30, 40).

5. Carrosserie selon l'une des revendications 1 à 4,
**caractérisée en ce qu'**au moins un évidement latéral (18, 32, 42) est conçu en forme de U dans un plan perpendiculaire par rapport à la structure de plancher et transversalement par rapport à la traverse (16, 31, 41), forme un contour (20, 33, 45) au moins sensiblement courbe et/ou présente un contour (33) qui possède plusieurs sections planes (34) s'étendant en biais les une par rapport aux autres.

6. Carrosserie selon l'une des revendications 1 à 5,
**caractérisée en ce qu'**au moins un évidement latéral (42) est conçu sous la forme d'une rainure, notamment rectangulaire, avec des flancs de rainure (46) s'étendant au moins sensiblement parallèlement l'un par rapport à l'autre et par rapport à la structure de plancher (40).

7. Carrosserie selon l'une des revendications 1 à 6,
**caractérisée en ce qu'**au moins une console (36) venant en prise dans l'au moins un évidement latéral (32) d'une traverse (31) est prévue et **en ce que** la traverse (31) est fixée à l'aide de la console (36), de préférence par complémentarité de formes et/ou par assemblage de force, par rapport à la structure de plancher (30), de préférence par rapport à la couche de couverture inférieure (13).

8. Carrosserie selon l'une des revendications 1 à 7,
**caractérisée en ce qu'**au moins un élément de montage (22) qui pénètre dans l'au moins un évidement latéral (19), notamment dans l'ouverture traversante (21), d'une traverse (16) est introduit et **en ce qu'**une vis (23) est vissée, à travers la couche de couverture inférieure (13) dans l'élément de montage (22), pour la fixation de la traverse (16) par rapport à structure de plancher (10), de préférence par rapport à la couche de couverture inférieure (13).

9. Carrosserie selon l'une des revendications 1 à 8,
**caractérisée en ce qu'**au moins un évidement latéral (18, 32, 42, 43) est rempli au moins sensiblement par une matière synthétique (17, 35, 48), de préférence moussée.

10. Carrosserie selon l'une des revendications 1 à 9,
**caractérisée en ce qu'**une pièce en matière synthétique (35, 48) distincte est prévue dans au moins un évidement latéral (32, 42, 43), de préférence dans chaque évidement latéral (32, 42, 43), de l'au moins une traverse (31, 41).

11. Carrosserie selon l'une des revendications 1 à 10,
**caractérisée en ce que** l'au moins une traverse (16, 31, 41) est au moins sensiblement symétrique par rapport à un plan le long de la traverse (16, 31, 41) et perpendiculaire à la structure de plancher (10, 30, 40).

12. Carrosserie selon l'une des revendications 1 à 11,
**caractérisée en ce qu'**elle présente une pluralité de traverses (16, 31, 41), notamment similaires, agencées au moins sensiblement en parallèle les unes des autres, de préférence respectivement espacées par une matière synthétique (17), notamment moussée.

13. Carrosserie selon l'une des revendications 1 à 12,
**caractérisée en ce que** la matière synthétique (17, 35, 48), notamment moussée, est du polyuréthane et/ou polystyrène et/ou l'au moins une traverse (16, 31, 41) est formée en contreplaqué.

14. Véhicule utilitaire (1) avec un châssis (11) et une carrosserie (2) selon l'une des revendications 1 à 13, la structure de plancher (10, 30, 40) étant portée par le châssis (11), la couche de couverture inférieure (13) étant associée au châssis (11) et l'au moins une traverse (16, 31, 41) étant reliée, notamment vissée, au châssis (11), notamment à au moins un longeron (12) du châssis (11).
